# EUROPEAN PATENT SPECIFICATION

(11) **EP 0 664 251 B1**
(45) Date of publication and mention of the grant of the patent: **03.09.1997**
(21) Application number: 94203698.9
(22) Date of filing: 20.12.1994
(51) Int. Cl.: B62D 35/00

(54) **Vehicle air dam**
Spoiler für ein Fahrzeug
Spoiler pour véhicule

(30) Priority: 18.01.1994 GB 9400825
(43) Date of publication of application: 26.07.1995
(73) Proprietor: DELPHI - COMPONENTES, SOCIEDAD ANONIMA, 26080 Logrono (ES)
(72) Inventor: Zapata, Javier, Logrono (ES)
(74) Representative: Denton, Michael John

(56) References cited:
- FR-A- 2 516 884
- GB-A- 1 583 701
- GB-A- 2 089 419
- US-A- 4 708 895
- PATENT ABSTRACTS OF JAPAN vol. 006 no. 178 (M-155) ,11 September 1982 & JP-A-57 087768 (HONDA MOTOR CO LTD) 1 June 1982,

## Description

The present invention relates to a vehicle air dam attachable to the front bumper or other structure of a vehicle.

In a known design of air dam, the air dam is attached to a vehicle bumper in a two stage process. The first stage involves feeding a plurality of tabs provided on the air dam through mating apertures in the bumper. The second stage involves attaching snap-fit clips to the ends of the tabs so as to trap the bumper between the air dam and the clips.

A problem with this known air dam is that as a result of temperature changes during use, the air dam stretches and acquires a sagging appearance.

The present invention seeks to provide an improved air dam.

According to an aspect of the present invention, there is provided a vehicle air dam comprising an elongate body portion and a plurality of fasteners extending from one side of the body portion and spaced from one another, the fasteners including biasing means operative when the air dam is fitted to a vehicle structure to bias the air dam towards the vehicle structure.

The biasing means act to keep the air dam in constant tension when fitted to a vehicle bumper or other vehicle structure, thereby avoiding sagging of the air dam which may occur during use.

Preferably, the fasteners are integral with the body portion. This can ensure that costs are not increased significantly.

Advantageously, each biasing means includes one or more barbs co-operable with the vehicle structure. Barbs have been found to provide a convenient form of biasing means.

In a preferred embodiment, each fastener includes an elongate head and first and second barbs on opposing sides of the head, the barbs extending towards the body portion.

The air dam preferably includes first and second straps extending from respective ends of the body portion and formed integrally therewith, each strap being formed with first and second barbed sides. The straps can ensure that the ends of the air dam are kept in tension when fitted to a vehicle bumper or other vehicle structure.

Advantageously, the fasteners and/or straps are formed from a plastics material.

According to another aspect of the present invention, there is provided a vehicle air dam comprising an elongate body portion and first and second straps extending from opposing ends of the body portion and formed integrally therewith, each strap including first and second barbed sides operative when the air dam is fitted to a vehicle structure to secure the air dam to the vehicle structure.

The use of end straps may provide sufficient constant tension of the air dam to prevent sagging.

An embodiment of the present invention is described below, by way of example only, with reference to the accompanying drawings, in which:
Figure 1 is a rear elevational view of an embodiment of vehicle air dam;
Figure 2 is a longitudinal cross-sectional view of the air dam of Figure 1 when fitted to a vehicle bumper;
Figure 3 is a transverse cross-sectional view of the air dam of Figure 1 fitted to a vehicle bumper, taken along line 3-3 of Figure 1; and
Figure 4 is an enlarged view of Figure 3.

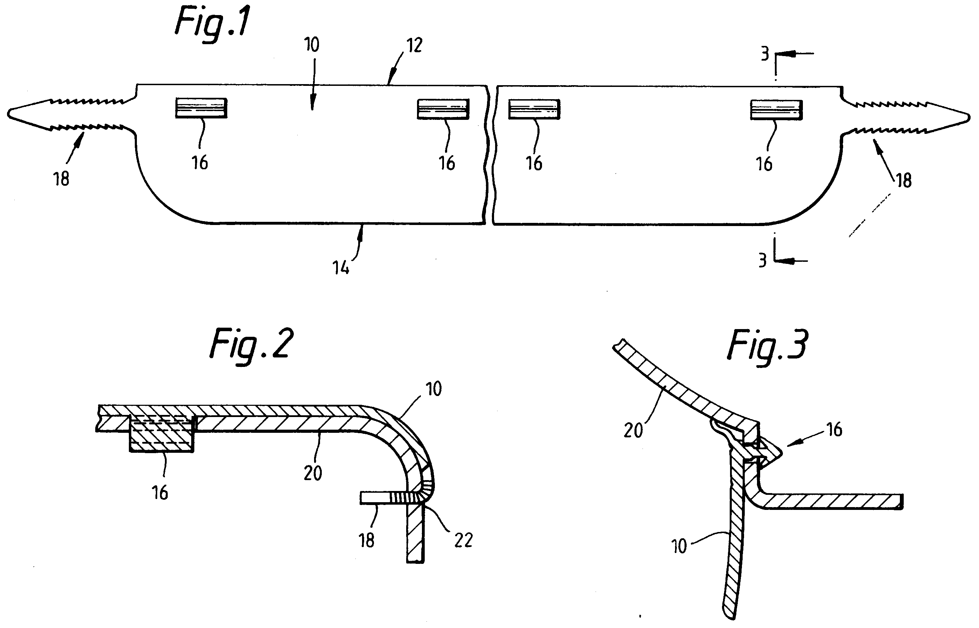

Referring to Figure 1, the embodiment of vehicle air dam shown is made from a flexible material and includes a generally rectangular body portion 10 having a first substantially straight bumper contacting edge 12 and a second substantially straight free edge 14 which at its ends is curved towards the bumper edge 12.

Proximate the bumper edge 12 there is provided a plurality of substantially rectangular barbed fasteners 16, all extending from the same side of the body portion 10 and being, in this embodiment, substantially equally spaced from one another. At either end of the body portion 10, there is provided an elongate strap 18 having a series of barbs extending along each side thereof. The end of each strap 18 is pointed to facilitate assembly of the air dam.

Referring to Figure 2, the air dam of Figure 1 is shown fitted to a vehicle bumper 20. The strap 18 is received in a slot 22 in the bumper, the slot 22 having a height such that the barbs of the strap 18 engage the ends of the slot so as to retain the strap 18 in the slot 22.

When the air dam is fitted to the bumper 20, the straps 18 are pulled tight within the slots 22 so as to tense the air dam.

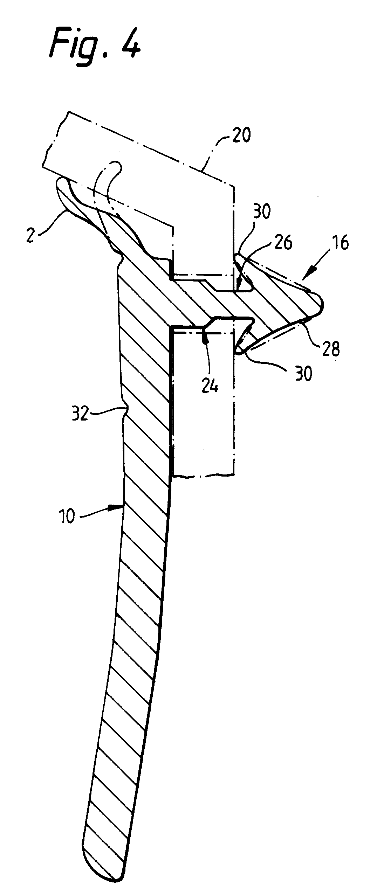

Referring to Figures 3 and 4, the barbed fastener 16 shown in cross-section includes a base 24 of relatively greater cross-sectional area, a neck 26 of relatively smaller cross-section and a head 28 which, in the views of Figures 3 and 4 is in the shape of an arrow, having a pointed end and first and second barbs 30 at opposing sides of the head 28. The barbs 30 extend over the neck 26 such that, on insertion of the fastener 16 through the slot in the bumper 20, the barbs 30 are biased towards the neck 26, subsequently to extend outwardly of the neck on clearing the slot in the bumper 20.

The spacing between the ends of the barbs 30 and the body portion 10 of the air dam is chosen so as to be less than the thickness of the bumper portion through which the fasteners 16 are passed. In this manner, when the air dam is fitted to the bumper 20, the ends of the barbs 30 are biased outwardly of the neck 26 by the bumper 20, producing a force acting to bring the barbs to their rest position. The transverse component of this force acts to pull the head 28 of the fastener away from the bumper 20 and hence the body portion 10 closer to the bumper 20. Thus, the barbs 30 act as biasing means for biasing the air dam towards the bumper.

In the example shown in Figures 3 and 4, the bumper edge 12 of the air dam is in the form of a resilient flap which is deformed by the bumper 20 from the position shown in dotted outline to the position shown in solid form. The flap 12 is of known type so is not described in further detail herein.

A groove 32 extends along the length of the body portion 10 of the air dam to give added elasticity.

When the air dam is fitted to the bumper 20, the tension provided by the straps 18 and the fasteners 16 causes the air dam to be substantially flat along the bumper 20. During use, any stretching or slight realignment of the air dam is taken up by the elasticity of the straps 18 and by the barbs 30 of the fasteners 16.

A preferred material for the air dam is a plastics material called Santopren (TM), which is commonly available. Any other suitable material may be used.

## Claims

1. A vehicle air dam comprising an elongate body portion (10) and a plurality of fasteners (16) extending from one side of the body portion and spaced from one another, the fasteners being operative to fasten the air dam to a vehicle structure (20) and including biasing means (30) operative when the air dam is fitted to the vehicle structure to bias the air dam towards the vehicle structure.

2. An air dam according to claim 1, wherein the fasteners (16) are integral with the body portion (10).

3. An air dam according to claim 1 or 2, wherein each biasing means includes one or more barbs (30) co-operable with the vehicle structure (20).

4. An air dam according to claim 1, 2 or 3, wherein each fastener (16) includes an elongate head (28) and first and second barbs (30) on opposing sides of the head, the barbs extending towards the body portion (10).

5. An air dam according to any preceding claim, comprising first and second straps (18) extending from respective ends of the body portion (10) and formed integrally therewith, each strap being formed with first and second barbed sides.

6. An air dam according to any preceding claim, wherein the fasteners (16) and/or straps (18) are formed from a plastics material.

7. A vehicle air dam comprising an elongate body portion (10) and a first and second straps (18) extending from opposing ends of the body portion and formed integrally therewith, each strap including first and second barbed sides operative when the air dam is fitted to a vehicle structure (20) to secure the air dam to the vehicle structure.

## Patentansprüche

1. Fahrzeugspoiler mit einem länglichen Körperteil (10) und einer Vielzahl von Befestigungselementen (16), die sich von einer Seite des Körperteils erstrecken und voneinander beabstandet sind, wobei die Befestigungselemente wirksam sind, den Spoiler an der Fahrzeugstruktur (20) zu befestigen, und ein Vorspannungsmittel (30) umfassen, das wirksam ist, wenn der Spoiler an der Fahrzeugstruktur befestigt ist, den Spoiler in Richtung der Fahrzeugstruktur vorzuspannen.

2. Spoiler nach Anspruch 1, worin die Befestigungselemente (16) integral mit dem Körperteil (10) sind.

3. Spoiler nach Anspruch 1 oder 2, worin jedes Vorspannungsmittel einen oder mehrere Widerhaken (30) umfaßt, die mit der Fahrzeugstruktur (20) zusammenarbeiten können.

4. Spoiler nach Anspruch 1, 2 oder 3, worin jedes Befestigungselement (16) einen länglichen Kopf (28) und erste und zweite Widerhaken (30) auf entgegengesetzten Seiten des Kopfes umfaßt, wobei die Widerhaken sich in Richtung des Körperteils (10) erstrecken.

5. Spoiler nach einem der vorhergehenden Ansprüche mit ersten und zweiten Bändern (18), die sich von jeweiligen Enden des Körperteils (10) erstrecken und integral damit ausgebildet sind, wobei jedes Band mit ersten und zweiten, mit Widerhaken versehenen Seiten ausgebildet ist.

6. Spoiler nach einem der vorhergehenden Ansprüche, worin die Befestigungselemente (16) und/oder Bänder (18) aus einem Kunststoffmaterial gebildet sind.

7. Fahrzeugspoiler mit einem länglichen Körperteil (10) und ersten und zweiten Bändern (18), die sich von entgegengesetzten Enden des Körperteils erstrecken und integral damit ausgebildet sind, wobei jedes Band erste und zweite, mit Widerhaken versehene Seiten umfaßt, die wirksam sind, wenn der Spoiler an der Fahrzeugstruktur (20) befestigt ist, den Spoiler an der Fahrzeugstruktur zu sichern.

## Revendications

1. Becquet pour véhicule comprenant une partie formant un corps allongé (10) et une pluralité d'organes de fixation (16) s'étendant depuis un côté de la partie formant corps et espacés les uns des autres, les organes de fixation ayant pour fonction de fixer le becquet à une structure de véhicule (20) et comprenant des moyens de rappel (30) ayant pour fonction, lorsque le becquet est installé sur la structure de véhicule, de rappeler le becquet en direction de la structure de véhicule.

2. Becquet selon la revendication 1, dans lequel les organes de fixation (16) sont en une seule pièce avec la partie formant corps (10).

3. Becquet selon la revendication 1 ou 2, dans lequel chaque moyen de rappel comprend une ou plusieurs dents de retenue (30) coopérant avec la structure de véhicule (20).

4. Becquet selon la revendication 1, 2 ou 3, dans lequel chaque organe de fixation (16) comprend une tête allongée (28) et des première et seconde dents de retenue (30) de chaque côté de la tête, les dents de retenue s'étendant en direction de la partie formant corps (10).

5. Becquet selon l'une quelconque des revendications précédentes, comprenant des première et seconde languettes (18) s'étendant depuis les extrémités correspondantes de la partie formant corps (10) et formées pour être solidaires de celle-ci, chaque languette étant formée avec des premier et second côtés pourvus de dents de retenue.

6. Becquet selon l'une quelconque des revendications précédentes, dans lequel les organes de fixation (16) et/ou les languettes (18) sont formés à partir d'une matière plastique.

7. Becquet pour véhicule comprenant une partie formant corps allongé (10) et des première et seconde languettes (18) s'étendant depuis les extrémités opposées de la partie formant corps et formées pour être solidaires de celle-ci, chaque languette comprenant des premier et second côtés pourvus de dents de retenue ayant pour action, lorsque le becquet est installé sur une structure de véhicule (20), de fixer le becquet à la structure de véhicule.
